# EUROPEAN PATENT APPLICATION

(11) **EP 1 714 948 A2**
(43) Date of publication of application: **25.10.2006**
(21) Application number: 06008402.7
(22) Date of filing: 24.04.2006
(51) Int. Cl.: C03C 3/062, C03C 3/17, C03C 4/08

(54) **Alumninophosphate glass containing copper (II) oxide and uses thereof for light filtering**

(30) Priority: 22.04.2005 US 673760 P
(71) Applicant: Schott Corporation, Elmsford NY 10523 (US)
(72) Inventor: Hayden, Joseph S., Clarks Summit, PA 18411 (US); Pucilowski, Sally, Luzerne, PA 18709 (US)
(74) Representative: KEIL & SCHAAFHAUSEN Patentanwälte

(57) **Abstract**

Aluminophosphate glasses containing copper(11) oxide having a low transmission in the near infrared range with a steep absorption edge, as well as a very uniform high transparency in the visible range and excellent chemical durability under conditions of exposure to elevated temperature and high relative humidity, are particularly suitable as filter glasses for use in CCD and CMOS camera and detector applications and as filter glass, e.g., for goggles and color displays. The glass comprising, in % by weight on an oxide basis: 65 - 80 of P₂O₅; 4 -20 of Al₂O₃; 0 - <5.5 of B₂O₃, 0 - 2.1 of La₂O₃; 0 - 2.1 of Y₂O₃, 0 - 3 of SiO₂; >2 - 12.5 of Li₂O; 0-6 of Na₂O; 0 - 4 of K₂O; 0 - 2.5 of Rb₂O; 0 - 2.5 of Cs₂O; 0 - 7.9 of MgO; 0-5 of CaO; 0 - 5 of SrO; 0 - 10 of BaO; 0 - 8 of ZnO; 0 - 5 ZrO₂, 5 - 15 of CuO; and 0 - 0.5 of V₂O₅, wherein the sum of alkaline-earth metal oxides + ZnO (ΣR'O) is <18; and the sum of CuO + V₂O₅ is 5-15.

## Description

### Field of the Invention

This invention relates to glasses having low transmission in the infrared range, and in particular to aluminophosphate glasses containing copper (II) oxide.

Glasses having low transmission in the infrared range are used as color correction filters in color video cameras, as shields for illuminated color displays (e.g., in aircraft cockpits), as stray light filters in monochromators, as graduated filters, as inorganic components in plastic composite filters, as goggles, and as filter glasses for CCD (charge-coupled device) and CMOS (complementary metal oxide semiconductor) camera and detector applications.

By way of example, color video cameras mainly use CCDs (charge coupled device) or CMOSs (complementary metal oxide semiconductor) as solid-state image sensing devices. These solid-state image sensing devices generally have a light sensitivity that extends to the near infrared region. Thus, when natural light impinges on the image sensing device, the formed image becomes reddish. Therefore, to avoid this problem, light which is to impinge onto the image sensing device is first passed through an IR filter which absorbs light in the near infrared region.

It is desirable for glasses used as IR filters to possess as high a transparency as possible in the near UV range and visible range of light (about 400-625 nm) and as low as possible a transparency in the infrared range (above about 625 nm). As a result, the glass is largely color-neutral. For example, when using a video camera, it is desirable for the intensity of the incident radiation in the region >700 nm to be weakened so that the red cast of the recording caused by CCDs and/or CMOSs is compensated.

In addition, it is desirable for the glasses to possess sufficient weathering resistance to ensure that the spectral transmission characteristics remain unchanged in humid air. Further, a low thermal expansion is also desirable, especially for industrial production of large-surface filters. Thus, IR-absorbing glasses for use as IR filters preferably possess a steep absorption edge in the near infrared range, uniform high transmission in the transparent range for near-UV and visible light, a low thermal expansion, and good weathering resistance.

Aluminophosphate glasses containing copper (II) oxide and their use as optical glass filters are both known within the art. For example, US 5,713,212 discloses an aluminophosphate glass containing copper(II) oxide, suitable for use as a filter glass, having a low transmission in the near infrared range with a steep absorption edge, and uniform high transparency in the visible range. The glass comprises, in % by weight on an oxide basis, 67-77 of P₂O₅; 8-13 of Al₂O₃; 0-5.5 of B₂O₃; 0-2.1 of SiO₂; 0-2.5 of Li₂O; 0-6 of Na₂O; 0-14 of K₂O; 0-2.5 of Rb₂O; 0-2.5 of Cs₂O; Σ alkali metal oxide 3-14; 2.5-4.9 of MgO; 0-2.5 of CaO; 0-2.5 of SrO; 0-2.5 of BaO; 0-2.5 of ZnO; Σ alkaline-earth metal oxides + ZnO less than 5; 2-7.5 of CuO; 0.001-0.5 of V₂O₅; and CuO+V₂O₅ of 2-7.5.

US 5,750,448 discloses a copper(II) oxide-containing aluminophosphate glass having good chemical resistance, very good devitrification stability, high transmission at wavelengths in the range from 350 to 550 nm, and a refractive index n_{d} of from 1.52 to 1.54, comprising (in % by weight, based on oxide): Al₂O₃ 4-9; P₂O₅ 67-75; BaO 0.5-6; CaO 0.1-1; MgO 0-4; SrO 0-1; ZnO 0.2-1; Σ BaO+CaO+MgO+SrO+ZnO 3.5-7; Na₂O 1.5-5; K₂O 2.5-3.5; Li₂O 0.5-5; Σ Na₂O+K₂O+Li₂O 5-13; SiO₂ 0-1; B₂O₃ 1-2.5; As₂O₃ 0.1-0.5; Cl⁻ 0-0.3; F⁻ 0-1.3; CeO₂ 0.2-0.4; CuO 1-6; and with K_{G} = Σ Al₂O₃+SiO₂+CeO₂ / Σ P₂O₅+B₂O₃ 0.06-0.125.

See also the following which disclose Cu-containing glasses and their manufacture: US 6,225,244, US 5,668,066, US 5,242,868, US 5,227,343, DE 29 08 697, DE 29 26 721, DE 32 29 442, DE 34 14 682, and DE 40 31 469.

### Summary of the Invention

The current invention relates to, for example, a phosphate glass containing copper(II) oxide that offers a low transmission in the near infrared range with a steep absorption edge, as well as a very uniform high transparency in the visible range, in combination with excellent chemical durability under conditions of exposure to elevated temperature and high relative humidity.

An aspect of the invention is, therefore, to provide a Cu-containing, IR-absorbing, aluminophosphate glass suitable for use as an IR filter having a steep absorption edge in the near infrared range, uniform high transmission in the transparent range for near-UV and visible light, a low thermal expansion, and good weathering resistance.

In accordance with the invention, there is provided a Cu-containing aluminophosphate glass composition comprising (in wt%):

| | |
|---|---|
| P₂O₅ | 65-80 |
| Al₂O₃ | 4-20 (e.g., 4-15) |
| SiO₂ | 0-5 |
| B₂O₃ | 0-<5.5 |
| Y₂O₃ | 0-2.1 |
| La₂O₃ | 0-2.1 |
| MgO | 0-7.9 |
| CaO | 0-2.5 |
| SrO | 0-2.5 |
| BaO | 0-2.5 |
| ZnO | 0-8 |
| ΣR'O | <18 |
| Li₂O | >2-12.5 |
| Na₂O | 0-6 |
| K₂O | 0-4 |
| Rb₂O | 0-2.5 |
| Cs₂O | 0-2.5 |
| ΣR"₂O | >2-15 |
| ΣR'''₂O₃ | 4-24 (e.g., 4-20 or 4-15) |
| CuO | 5-15 (e.g., 5-12 %, 5-10.5 %, or 5-7.5%) |
| V₂O₅ | 0-0.5 |
| ΣCuO + V₂O₅ | 5-15 (e.g., 5-12 %, 5-10.5 %, or 5-7.5%) |

wherein ΣR'O is the sum of ZnO and all alkaline earth metal oxides, ΣR"₂O is the sum of all alkali metal oxides, and ΣR'''₂O₃ is the sum of all R'''₂O₃ compounds wherein R''' is Al, B, Y or La.

According to a further aspect of the invention, the aluminophosphate glass further comprises 0-3.0 wt. % CeO₂, 0-3.0 wt. % MnO₂, and 0-0.5 wt. % Cr₂O₃, wherein the total amount of CeO₂, MnO₂, and Cr₂O₃ is >0 - 5.5% by weight. In addition or alternatively, according to a further aspect of the invention, the aluminophosphate glass further comprises 0- 0.3 wt. % Sb₂O₃, 0-0.3 wt. % SO₃, 0-0.5 wt. % chloride, and 0-10 wt. % (such as 0-3 wt. % and 0.05 wt.%) fluoride, wherein the total amount of Sb₂O₃, SO₃, and chloride is >0 - 0.8% by weight. The fluoride content can be higher, for example, 0-30 wt. % or 0-20 wt. %.

According to a further aspect there is provided a glass for use as a color correction filters in color video cameras, a shield for illuminated color displays (e.g., in aircraft cockpits), a stray light filters in monochromators, a graduated filter, a inorganic component in plastic composite filters, a lens in a goggle, a filter glass for CCD and CMOS camera, or a light detector, wherein said glass is a Cu containing aluminophosphate glass composition comprising (in wt%):

| | |
|---|---|
| P₂O₅ | 65-80 |
| Al₂O₃ | 4-20 (e.g., 4-15) |
| SiO₂ | 0-5 |
| B₂O₃ | 0-<5.5 |
| Y₂O₃ | 0-2.1 |
| La₂O₃ | 0-2.1 |
| MgO | 0-7.9 |
| CaO | 0-2.5 |
| SrO | 0-2.5 |
| BaO | 0-2.5 |
| ZnO | 0-8 |
| ΣR'O | <18 |
| Li₂O | >2-12.5 |
| Na₂O | 0-6 |
| K₂O | 0-4 |
| Rb₂O | 0-2.5 |
| Cs₂O | 0-2.5 |
| ΣR"₂O | >2-15 |
| ΣR"'₂O₃ | 4-24 (e.g., 4-20 or 4-15) |
| CuO | 5-15 (e.g., 5-12 %, 5-10.5 %, or 5-7.5%) |
| V₂O₅ | 0-0.5 |
| ΣCuO + V₂O₅ | 5-15 (e.g., 5-12 %, 5-10.5 %, or 5-7.5%) |

wherein ΣR'O is the sum of ZnO and all alkaline earth metal oxides, ΣR"₂O is the sum of all alkali metal oxides, and ΣR'''₂O₃ is the sum of all R'''₂O₃ compounds wherein R''' is Al, B, Y or La.

According to a further aspect of the invention, the aluminophosphate glass for use in the above-mentioned devices further comprises 0-3.0 wt. % CeO₂, 0-3.0 wt. % MnO₂, and 0-0.5 wt. % Cr₂O₃, wherein the total amount of CeO₂, MnO₂, and Cr₂O₃ is >0 - 5.5% by weight. In addition or alternatively, according to a further aspect of the invention, the aluminophosphate glass for use in the above-mentioned devices further comprises 0- 0.3 wt. % Sb₂O₃, 0-0.3 wt. % SO₃, 0-0.5 wt. % chloride, and 0-10 wt. % (such as 0-3 wt. % and 0.05 wt.%) fluoride, wherein the total amount of Sb₂O₃, SO₃, and chloride is >0 - 0.8% by weight. The fluoride content can be higher, for example, 0-30 wt. % or 0-20 wt. %.

According to a further aspect there is method of filtering infrared light between at least one light source and at least one light receiver comprising: positioning between the light source and the light receiver a glass, wherein the glass comprises a Cu containing aluminophosphate glass composition comprising (in wt%):

| | |
|---|---|
| P₂O₅ | 65-80 |
| Al₂O₃ | 4-20 (e.g., 4-15) |
| SiO₂ | 0-5 |
| B₂O₃ | 0-<5.5 |
| Y₂O₃ | 0-2.1 |
| La₂O₃ | 0-2.1 |
| MgO | 0-7.9 |
| CaO | 0-2.5 |
| SrO | 0-2.5 |
| BaO | 0-2.5 |
| ZnO | 0-8 |
| ΣR'O | <18 |
| Li₂O | >2-12.5 |
| Na₂O | 0-6 |
| K₂O | 0-4 |
| Rb₂O | 0-2.5 |
| Cs₂O | 0-2.5 |
| ΣR"₂O | >2-15 |
| ΣR"'₂O₃ | 4-24 (e.g., 4-20 or 4-15) |
| CuO | 5-15 (e.g., 5-12 %, 5-10.5 %, or 5-7.5%) |
| V₂O₅ | 0-0.5 |
| ΣCuO + V₂O₅ | 5-15 (e.g., 5-12 %, 5-10.5 %, or 5-7.5%) |

wherein ΣR'O is the sum of ZnO and all alkaline earth metal oxides, ΣR"₂O is the sum of all alkali metal oxides, and ΣR'''₂O₃ is the sum of all R'''₂O₃ compounds wherein R''' is Al, B, Y or La, whereby said glass reduces the amount of infrared light from said at least one light source that impinges against said at least one light receiver.

According to a further aspect of the invention, the aluminophosphate glass for use in the above-mentioned method further comprises 0-3.0 wt. % CeO₂, 0-3.0 wt. % MnO₂, and 0-0.5 wt. % Cr₂O₃, wherein the total amount of CeO₂, MnO₂, and Cr₂O₃ is >0 - 5.5% by weight. In addition or alternatively, according to a further aspect of the invention, the aluminophosphate glass for use in the above-mentioned method further comprises 0- 0.3 wt. % Sb₂O₃, 0-0.3 wt. % SO₃, 0-0.5 wt. % chloride, and 0-10 wt. % (such as 0-3 wt. % and 0.05 wt.%) fluoride, wherein the total amount of Sb₂O₃, SO₃, and chloride is >0 - 0.8% by weight. The fluoride content can be higher, for example, 0-30 wt. % or 0-20 wt. %.

### Brief Description of the Drawings

Various other features and attendant advantages of the present invention will be more fully appreciated as the same becomes better understood when considered in conjunction with the accompanying drawings wherein:

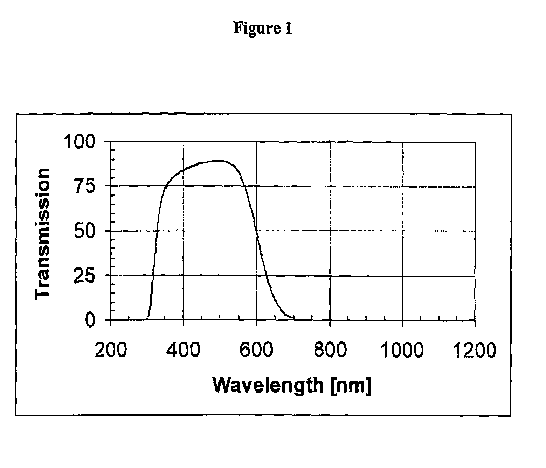

Figure 1 presents a representative desirable transmission curve for glasses of this invention.

Glasses in accordance with the invention have low transmission in the infrared range, and therefore, are useful as color correction filters in color video cameras, as shields for illuminated color displays (e.g., in aircraft cockpits), as stray light filters in monochromators, as graduated filters, as an inorganic component in plastic composite filters or as goggles. The glasses of the present invention are particularly useful when employed as filter glasses for CCD and CMOS camera and detector applications where it is desirable to block transmission of IR light from reaching the detector while simultaneously passing a maximum amount of light in the visible part of the spectrum.

The glasses have as high a transparency as possible in the near UV range and in the visible range of light (about 450-625 nm) and as low as possible a transparency in the infrared range (above about 625 nm). In this case, the glass is largely color-neutral. A representative desirable transmission curve for glasses of this invention is provided in Figure 1.

In particular, the aluminophosphate glasses according to the invention preferably exhibit a maximum transmission (including reflecting losses) exceeding 40% measured on 1 mm thick specimens in the wavelength range of 490 to 560 nm, a transmission (including reflecting losses) of at least about 30% measured on 1 mm thick specimens at a wavelength of 600 nm; and a transmission (including reflecting losses) not exceeding about 2% measured on 1 mm thick specimens at a wavelength of 700 nm.

Further, it is especially preferred that aluminophosphate glasses according to the invention exhibit a maximum transmission (including reflecting losses) of > about 90%, measured on a 1 mm thick sample in the wavelength range of 495 to 505 nm, a transmission (including reflecting losses) of 47% +/- 3% measured on 1 mm thick specimen at a wavelength of 600 nm, and a transmission (including reflecting losses) not exceeding < 2% measured on 1 mm thick specimen at a wavelength of 700 nm.

The wavelength for maximum transmission (as measured on a 1 mm thick sample) is preferably 480 nm - 550 nm, more preferably 480 nm - 520 nm, especially 490 nm - 510 nm, and in particular 495 nm - 505 nm.

Preferably, the transmission at 600 nm is greater than about 35%, more preferable >40%, and the preferred transmission at 700 nm is preferably less than about 2%, more preferable <1.5%.

Thus, according to one aspect of the invention, the aluminophosphate glass according to the invention has: a maximum transmission (including reflecting losses), measured on 1 mm thick specimens, exceeding 40% and within the wavelength range of 490 to 560 nm, especially 520 to 560 nm, and a transmission (including reflecting losses) at a wavelength of 600 nm, measured on 1 mm thick specimens, of at least about 30%; and a transmission (including reflecting losses) at a wavelength of 700 nm, not exceeding about 2%, preferably not exceeding about 1.5%.

As discussed above, the glasses preferably exhibit high weathering resistance to ensure that the spectral transmission characteristics remain unchanged in humid air and when exposed to elevated temperatures. A representative test condition is to expose glass specimens to a temperature of 60°C under 90% relative humidity for time periods up to 500 hours. Glasses of the present invention do not show evidence of significant chemical degradation after exposure to these test conditions as determined from visual inspection of glass surfaces for blemishes, fog or film covered surface regions, pitting, or deposition of glass components dissolved from the glass and resolidified on the glass surface. If this condition is satisfied, the transmission characteristics are not significantly degraded by the deterioration of the optical quality of filter surfaces.

Ordinarily, phosphate-based glass compositions are not known for good chemical durability. But, surprisingly, glasses in accordance with the invention offer significant durability improvement. While it is not fully understood why the glasses provide improved durability under test conditions of 60°C temperature and 90% relative humidity for time periods of 500 hours, it is believed that it may be due to the use of glass modifiers (such as Al, Zn, Ca, Mg, and Li) that form bonds of highly covalent nature with oxygen.

The glasses of the subject invention are based on phosphorous. Use of phosphorous as the basic glass forming oxide of the glasses of the present invention are conducive to achieving the desired transmission performance from colorants doped into the glass. The more conventional silicate type glasses, when doped with colorants, do not offer acceptable transmission curves. In general, the glasses have a P₂O₅ content of 65 to 80 wt % (such as 68 to 78 wt %, or 71 to 78 wt %), for example, 65, 66, 67, 68, 69, 70, 71, 72, 73, 74, 75, 76, 77, 78, 79, or 80 wt%. Further preference is given to glasses having a P₂O₅ content above 68 wt %, more preferably above 70 wt %, even more preferably above 72 wt %.

In addition, in general, the glasses have a Al₂O₃ content of 4 to 20 %, preferably 4 to 15 wt % (such as 5 to 12 wt %, 4 to 14 wt %, 8 to 12 wt %), for example, 4, 5, 6, 7, 8, 9, 10, 11, 12, 13, or 14 wt %. Preference is given to glasses having an Al₂O₃ content above 5 wt %, more preferably above 6 wt %, and even more preferably over 8 wt % since these glasses are characterized by improved chemical durability.

In addition, the glasses also can contain B₂O₃ of up to <5.5 wt% (e.g., 1.5 to 5 wt %), especially 0 to 5 wt%, particularly 0 to 4 wt%. Also, the glasses can contain Y₂O₃ and/or La₂O₃ each in the amounts of up to 2.1 wt%.

In general, the glasses have a ΣR'''₂O₃ content of 4 to 15 wt % (such as 6 to 14 wt%, 8 to 12 wt%, 8 to 14 wt%, or 8 to 15 wt%), for example, 4, 5, 6, 7, 8, 9, 10, 11, 12, 13, 14, or 15 wt %, where ΣR'''₂O₃ is the sum of all R'''₂O₃ compounds and R"' is Al, B, Y and La. Preference is given to glasses having an ΣR'''₂O₃ content above 5 wt %, more preferably above 6 wt %, and even more preferably over 8 wt %, since these glasses are characterized by improved chemical durability. The preferred cation for R''' is Al.

The alkali metal oxides used in the inventive glasses are Na₂O, K₂O, Li₂O, Rb₂O and Cs₂O, preferably Na₂O and Li₂O, and especially Li₂O. The amount of combined alkali metal oxides (ΣR"₂O where R" is Na, K, Li, Rb and Cs) is >2 to 15 wt %, for example, 2, 3, 4, 5, 6, 7, 8, 9, 10, 11, 12, 12, 13, 14, or 15 wt %, preferably >2 to 10 wt %. For example, the glasses can have a R"₂O content of >2 to 4.5 wt %. These additives enhance meltability of the compositions of this invention. The glasses preferably have an Li₂O content of >2 to 15 wt%, (e.g., 0.6 - 3.8 wt %, 2.1-5.5 wt. %, 2.1-5 wt. %), an Na₂O content of 0-6 wt%, a K₂O content of 0-4 wt%, and Rb₂O and Cs₂O contents of 0-2.5 wt% each.

The alkaline metal oxide used in the inventive glasses are MgO, CaO, SrO and BaO. However, ZnO can be used interchangeably for these alkaline metal oxides. CaO, SrO and BaO are each employed at levels of 0-2.5 wt.%. MgO and ZnO can be employed at higher levels, for example, 0 to 7.9 wt% MgO and 0 to 8 wt% ZnO. Overall, the sum of the alkaline metal oxides and ZnO, (ΣR'O where R' is Mg, Ca, Sr, Ba and Zn), is <18 wt% (such as 0-8 wt. % or 2-6 wt. %), for example, 0.5, 1, 1.5, 2, 3, 4, 5, 6, 7, 8, 9, 10, 11, 12, 13, 14, 15, or 16 wt %. Preferably, MgO and ZnO are the employed metal oxides at combined levels of, for example, 0 to 16 wt %, for example, 0.5, 1, 1.5, 2, 3, 4, 5, 6, 7, 8, 9, 10, 11, 12, 13, 14, 15, or 16 wt %, preferably 0 to 15 wt% and more preferably 0 to 10 wt %. For example, the MgO content can be 0 to 3 wt% (e.g., 1.5 - 3.0 wt %) and/or the ZnO content can be 0 to 6 wt% (e.g., 5-5.7 wt%). Most preferably, MgO is the employed metal oxide at levels of >0 to 7.9 wt%. These additives enhance the chemical durability of the glasses of this invention.

According to a further aspect of the invention, the BaO content of the glass is preferably < 0.5 wt.%, especially < 0.4 wt.%,, and particularly < 0.3 wt.%. According to other aspects of the invention, the CaO content is < 0.1 wt.% and/or the ZnO content is 5-8 wt.%. According to an additional aspect of the invention, the MgO content is at least 2.5% or ZnO content is at least 5%.

The CuO content is, for example, 5 to 7.5 wt% (for example, 5 to 6.5 wt %, to provide absorption in the infrared range. However, higher contents of CuO are also possible. Thus, the CuO content can be 5-15 wt. %, e.g., 5-12 % or 5-10.5 %. Further, an optional addition of 0.001 to 0.5% by weight of V₂O₅ affects the steepness of the absorption edge in the IR and can be extremely beneficial. Since with high V₂O₅ contents, an absorption canroccur in the visible region, an addition of not more than 0.001 to 0.1% by weight, especially not more than 0.001 to 0.05% by weight, of V₂O₅ is preferred when V₂O₅ is added to the glasses of the present invention. However, the total amount of CuO and V₂O₅ generally does not exceed 15 % by weight, and preferably does not exceed 12% (for example not more than 10. 5 or 7.5% by weight).

For the absorption in the infrared range, the presence of copper ions in the +2 valence state (for example, but not necessarily, in conjunction with the presence of vanadium ions in the +5 valence state) is important. Therefore, the glass is preferably melted in a way known in the art under oxidizing conditions. This can be achieved, e.g., by the addition of nitrates to the batch. Good results are obtained by incorporating amounts of up to 5.5% by weight of NO₃ ions, especially 1.5 to 5.5% by weight of NO₃ ions, relative to the finished glass. For stabilization of the oxidation steps, it is optional for the glass to contain oxidation agents such as MnO₂, Cr₂O₃ or CeO₂. The addition of CeO₂ is preferred, since in this way, a frequently desired absorption in the near UV range can be achieved. CeO₂ can be present in the glass in amounts of up to 3% by weight, preferably in amounts of 0.05 to 2.5% by weight. MnO₂ can be present in amounts of up to 3 % by weight, preferably in amounts of up to 1 % by weight, and Cr₂O₃ can be present in amounts of up 0.5% by weight, preferably of up to 0.1% by weight. Since Cr₂O₃ causes absorption in the visible range of the spectrum, it is used only in rare cases. The total amount of the oxidation agents CeO₂, MnO₂ and Cr₂O₃ is not to exceed 5.5% by weight, and a total content of not more than 3% by weight is preferred, especially not more than 1% by weight.

If necessary, the glass can be fined with usual fining agents, e.g., Sb₂O₃, halogen such as F or Cl, or SO₃. But, in this case, the fining agents must not deleteriously influence the equilibrium between the higher valence and lower valence state of ions, which can occur in several oxidation steps, e.g., Cu, Ce and V ions, in the direction of the lower valence state. This is especially the case when halogen (Cl or F) or Sb₂O₃ is used in the fining. The concentration of the coloring ions, the oxidation agents and fining agents, therefore, is to be coordinated to achieve optimal results, which can be conducted routinely by some simple test melts.

Normally favorable results are achieved by using Sb₂O₃ and SO₃ in amounts of 0.3% by weight each and of halide (Cl, F) in amounts of up to 0.5% by weight, but the added amount of fining agents is not to exceed a total of 0.8% by weight, and normally, an amount of at most 0.5% by weight is sufficient.

Although the glass has generally be described as containing CuO, alone or in combination with V₂O₅, as colorants to provide the IR filtering properties, it is also possible to use other colorants in conjunction with or in place of the CuO/CuO- V₂O₅ combination. These other colorants include Fe₂O₃, SnO₂, Nd₂O₃, Cr₂O₃, MnO₂, CoO, and NiO, which can each be employed in an amount up to 2 wt%.

The entire disclosures of all applications, patents and publications, cited above and below, are hereby incorporated by reference.

In the foregoing and in the following examples, all temperatures are set forth uncorrected in degrees Celsius; and, unless otherwise indicated, all parts and percentages are by weight.

### Examples

In the glass examples discussed below, compositions are expressed in weight% oxide and the code system explained in Table 1 has been employed as an indicator of inspected glass surface quality following exposure to 60°C temperature and 90% relative humidity for time periods of 500 hours.

Characterization of the glasses of the present invention were carried out in a series of two chemical durability tests of 60°C temperature and 90% relative humidity for time periods of 500 hours conducted in Blue M Electric model FRS-136 environmental test chamber. These characterizations are shown in Table 1.

**Table 1:**

| **Coding System to Indicate Glass Quality after Exposure for 500 hours at 60°C Temperature and 90% Relative Humidity** | |
|---|---|
| Code 1 - | Free of all observed surface defects |
| Code 2 - | Only minor point like markings observed, no film formation or fogged regions, essentially free of all major defects |
| Code 3 - | Slight presence of one or more fogged areas or evidence of film formation noted |
| Code 4 - | Surface mostly covered with film and or fogged regions |
| Code 5 - | Surface attacked, one or more areas exhibiting presence of solid deposits |

Preferably, the glass compositions according to the invention have a Code value of at most 3, especially at most 2, particularly at most 1.

Glasses of this invention can be conventionally prepared by mixing appropriate amounts of each constituent in a batch which is then charged into a fused silica or platinum crucible and melted by induction heating, e.g., 1000 °C to as much as 1500 °C depending on the chosen composition and constituents. Usage of fused silica crucibles nearly always is accompanied by incorporation of SiO₂ into the glasses of this invention at levels of 0.2 to 5 wt%. Preferably, the SiO₂ content of the glass composition is 0 to 3 wt%. The glasses can then be refined at temperatures exceeding temperatures of nominally 1200 °C from typically 2 to 4 hours, again depending on composition and thus melt viscosity, with equal intervals of oxygen and/or nitrogen gas bubbling and stirring. The glasses are then typically cast into steel molds and annealed at the transformation temperature plus about 20 °C for about 2 hours, followed by cooling to room temperature at 30 °C per hour. These procedures were followed in the examples in Table 2 presented below.

**Table 2**

| **Example Compositions with Durability Code following Exposure for 500 hours at 60°C Temperature and 90% Relative Humidity** | | | | | | |
|---|---|---|---|---|---|---|
| Oxide | CuP-1 | CuP-2 | CuP-3 | CuP-4 | CuP-5 | CuP-6 |
| P₂O₅ | 75.05 | 71.22 | 71.88 | 70.87 | 68.00 | 68.93 |
| Al₂O₃ | 5.46 | 11.33 | 5.83 | 5.75 | 5.31 | 10.96 |
| B₂O₃ | 4.00 | 1.91 | 2.04 | 2.01 | 2.04 | 1.85 |
| Li₂O | 3.77 | 3.77 | 4.03 | 3.97 | 3.67 | 0.65 |
| Na₂O | 0.37 | 0.37 | 0.39 | 0.39 | 0.36 | 6.57 |
| MgO | | | 3.65 | | | |
| CaO | | | | 5.01 | | |
| BaO | | | | | 9.53 | |
| ZnO | 5.61 | 5.62 | 6.00 | 5.91 | 5.46 | 5.44 |
| ZrO₂ | | | | | | |
| CuO | 5.65 | 5.66 | 6.04 | 5.95 | 5.50 | 5.48 |
| Sb₂O₃ | 0.09 | 0.13 | 0.14 | 0.14 | 0.13 | 0.13 |
| ΣR'O | 5.61 | 5.62 | 9.65 | 10.92 | 14.99 | 5.44 |
| ΣR"₂O | 4.14 | 4.14 | 4.42 | 4.36 | 4.03 | 7.22 |
| ΣR"₂O₃ | 9.46 | 13.24 | 7.87 | 7.76 | 7.35 | 12.81 |
| Code | 2 | 2 | 5 | 5 | 4 | 3 |
| | | | | | | |
| Oxide | CuP-7 | CuP-8 | CuP-9 | CuP-10 | CuP-11 | CuP-12 |
| P₂O₅ | 74.69 | 73.21 | 74.61 | 72.87 | 76.25 | 77.89 |
| Al₂O₃ | 5.43 | 8.18 | 8.14 | 8.15 | 5.69 | 9.88 |
| B₂O₃ | 3.41 | | | | 2.37 | |
| Li₂O | 3.75 | 3.68 | 2.76 | 2.34 | 2.36 | 3.24 |
| Na₂O | 0.37 | 0.36 | 0.35 | 0.36 | 0.36 | 0.36 |
| MgO | | | | 1.78 | 1.80 | 2.91 |
| CaO | | | | | | |
| BaO | | | | | | |
| ZnO | 5.59 | 5.47 | 5.31 | 5.45 | 5.50 | |
| ZrO₂ | 1.01 | 3.45 | 3.35 | 3.44 | | |
| CuO | 5.63 | 5.51 | 5.35 | 5.49 | 5.54 | 5.59 |
| Sb₂O₃ | 0.13 | 0.13 | 0.13 | 0.13 | 0.13 | 0.13 |
| ΣR'O | 5.59 | 5.47 | 5.31 | 7.23 | 7.3 | 2.91 |
| ΣR"₂O | 4.12 | 4.04 | 3.13 | 2.70 | 2.72 | 3.6 |
| ΣR"₂O₃ | 8.84 | 8.18 | 8.14 | 8.15 | 8.06 | 9.88 |
| Code | 3 | 2 | 1 | 3 | 3 | 1 |

Glasses have been melted and characterized for basic optical and physical properties as well as for curability when exposed for 500 hours at 60°C temperature and 90% relative humidity. These properties are summarized in Table 3 below. In Table 3, %T refers to the percent transmission, Tg refers to the glass transformation temperature and CTE refers to the coefficient of linear thermal expansion over the indicated temperature region. The CTE values are given in units of 10⁻⁷/K.

**Table 3**

| **Optical and Physical Properties of the Example Compositions** | | | | | | |
|---|---|---|---|---|---|---|
| Oxide | CuP-1 | CuP-2 | CuP-3 | CuP-4 | CuP-5 | CuP-6 |
| nd (30 C/hr.) | 1.54008 | 1.54438 | 1.54526 | 1.55084 | 1.55301 | 1.54020 |
| nm @ max %T | 540 | 536.9 | 537.0 | 540.7 | 552.6 | 536.3 |
| max %T | 58.13 | 54.95 | 55.93 | 52.02 | 41.50 | 55.20 |
| %T @ 600 nm | 40.12 | 29.2 | 29.73 | 30.05 | 30.14 | 32.66 |
| %T @ 700 nm | 1.24 | 0.3 | 0.21 | 0.28 | 0.68 | 0.57 |
| density | 2.67 | 2.714 | 2.717 | 2.738 | 2.862 | 2.758 |
| CTE (20-300°C) | 96 | 89.7 | 98.3 | 100.7 | 106.3 | 93.2 |
| CTE (50-250°C) | 95.7 | 88.4 | 95.4 | 97.9 | 104.4 | 93.2 |
| Tg | 375 | 417 | 399 | 389 | 385 | 423 |
| Code | 2 | 2 | 5 | 5 | 4 | 3 |
| | | | | | | |

| Oxide | CuP-7 | CuP-8 | CuP-9 | CuP-10 | CuP-11 | CuP-12 |
|---|---|---|---|---|---|---|
| nd (30 C/hr.) | 1.54468 | 1.54630 | 1.54572 | 1.54402 | 1.54079 | 1.53839 |
| nm @ max %T | 530 | 530 | 540 | 520 | 530 | 540 |
| max %T | 58.46 | 65.38 | 57.53 | 77.31 | 64.6 | 56.45 |
| %T @ 600 nm | 33.92 | 35.01 | 34.68 | 39.74 | 37.17 | 32.63 |
| %T @ 700 nm | 0.44 | 0.41 | 0.57 | 0.49 | 0.57 | 0.46 |
| density [gm/cm³] | 2.700 | 2.725 | 2.719 | 2.727 | 2.697 | 2.651 |
| CTE (20-300°C) | 94.3 | 85.5 | 88.0 | 81.2 | 90.2 | 87.8 |
| Tg [°C] | 406 | 422 | 442 | 443 | 427 | 459 |
| Code | 3 | 2 | 1 | 3 | 3 | 1 |

For reasons of easier manufacturability and higher yields during fabrication (cutting, grinding and polishing), it is preferred for the CTE (20-300°C) to be low. Thus, for the glasses according to the invention the CTE (20-300°C) is preferably less than about 110x10⁻⁷/K, more preferably <100x10⁻⁷/K and most preferably <90x10⁻⁷/K.

Lower Tg values quicken processing time (annealing), and, thus, for the glasses according to the invention Tg is preferably less than about 480°C, especially less than 460°C.

The preceding examples can be repeated with similar success by substituting the generically or specifically described reactants and/or operating conditions of this invention for those used in the preceding examples.

From the foregoing description, one skilled in the art can easily ascertain the essential characteristics of this invention and, without departing from the spirit and scope thereof, can make various changes and modifications of the invention to adapt it to various usages and conditions.

## Claims

1. A Cu-containing aluminophosphate glass composition comprising (in wt%):
| | |
|---|---|
| P₂O₅ | 65-80 |
| Al₂O₃ | 4-20 |
| SiO₂ | 0-5 |
| B₂O₃ | 0-<5.5 |
| Y₂O₃ | 0-2.1 |
| La₂O₃ | 0-2.1 |
| MgO | 0-7.9 |
| CaO | 0-2.5 |
| SrO | 0-2.5 |
| BaO | 0-2.5 |
| ZnO | 0-8 |
| ΣR'O | <18 |
| Li₂O | >2-12.5 |
| Na₂O | 0-6 |
| K₂O | 0-4 |
| Rb₂O | 0-2.5 |
| Cs₂O | 0-2.5 |
| ΣR"₂O | >2-15 |
| ΣR"'₂O₃ | 4-24 |
| CuO | 5-15 |
| V₂O₅ | 0-0.5 |
| ΣCuO+V₂O₅ | 5-15 |
wherein ΣR'O is the sum of ZnO and all alkaline earth metal oxides, ΣR"₂O is the sum of all alkali metal oxides, and ΣR'''₂O₃ is the sum of all R'''₂O₃ compounds wherein R''' is Al, B, Y or La.

2. A glass according to claim 1, wherein the amount of Cu is 5-12 wt. %.

3. A glass according to claim 1, wherein the amount of Cu is 5-10.5 wt. %.

4. A glass according to claim 1, wherein the amount of Cu is 5-7.5 wt. %.

5. A glass according to any one of claims 1 to 4, wherein said glass contains 0- 0.3 wt. % Sb₂O₃.

6. A glass according to any one of claims 1 to 5, wherein said glass contains 0-3.0 wt. % CeO₂.

7. A glass according to any one of claims 1 to 6, wherein said glass contains 0-3.0 wt. % MnO₂.

8. A glass according to any one of claims 1 to 7, wherein said glass contains and 0-0.5 wt. % Cr₂O₃.

9. A glass according to any one of claims 1 to 8, wherein the total amount of CeO₂, MnO₂, and Cr₂O₃ in said glass is >0 - 5.5% by weight.

10. A glass according to any one of claims 1 to 9, wherein said glass contains 0-0.3 wt. % SO₃.

11. A glass according to any one of claims 1 to 10, wherein said glass contains 0-0.5 wt. % chloride.

12. A glass according to any one of claims 1 to 11, wherein the total amount of Sb₂O₃, SO₃, and chloride is >0 - 0.8% by weight.

13. A glass according to any one of claims 1 to 12, wherein said glass contains wherein 0-10 wt. % fluoride.

14. A glass according to any one of claims 1 to 13, wherein the P₂O₅ content is 68 to 78 wt %.

15. A glass according to claim 14, wherein the P₂O₅ content is 71 to 78 wt %.

16. A glass according to any one of claims 1 to 15, wherein the Al₂O₃ content is 4 to 14 wt %.

17. A glass according to claim 16, wherein the Al₂O₃ content is 5 to 12 wt %.

18. A glass according to any one of claims 1 to 17, wherein the B₂O₃ content is 0 to 5 wt%.

19. A glass according to any one of claims 1 to 18, wherein the Y₂O₃ content is 0 to to 2.1 wt%, and the La₂O₃ content is 0 to to 2.1 wt %.

20. A glass according to any one of claims 1 to 19, wherein the Li₂O content is 2.1-5.5 wt. %.

21. A glass according to claim 20, wherein the Li₂O content is 2.1-5 wt. %.

22. A glass according to any one of claims 1 to 20, wherein the ΣR'O content is 0-8 wt. %.

23. A glass according to claim 22, wherein the ΣR'O content is 2-6 wt. %.

24. A glass according to any one of claims 1 to 23, wherein the MgO content is 1.5-3.0 wt %.

25. A glass according to any one of claims 1 to 24, wherein the ZnO content is 5-5.7 wt %.

26. A glass according to any one of claims 1 to 25, wherein the Al₂O₃ content is 4-15 and the ΣR'''₂O₃ content is 4 to 20 wt %.

27. A glass according to any one of claims 1 to 26, wherein the ΣR'''₂O₃ content is 4 to 15wt%.

28. A glass according to claims 1 to 27, wherein the ΣR'''₂O₃ content is 6 to 14 wt %.

29. A glass according to claim 28, wherein the ΣR'''₂O₃ content is 8 to 12 wt %.

30. A glass according to claim 28, wherein the ΣR'''₂O₃ content is 8 to 14 wt %.

31. A glass according to any one of claims 1 to 27, wherein the ΣR'''₂O₃ content is 8 to 15 wt %.

32. A Cu(II) containing aluminophosphate glass consisting essentially of, in wt %:
| | |
|---|---|
| P₂O₅ | 74.6 |
| Al₂O₃ | 8.1 |
| ZnO | 5.3 |
| Li₂O | 2.78 |
| Na₂O | 0.4 |
| ZrO₂ | 3.5 |
| CuO | 5.5 |
| Sb₂O₃ | 0.1. |

33. A glass according to claim 1, wherein said glass exhibits a maximum transmission, including reflecting losses, exceeding 40% measured on 1 mm thick specimens in the wavelength range of 490 to 560 nm; a transmission, including reflecting losses, of at least 30% measured on 1 mm thick specimens at a wavelength of 600 nm; and a transmission, including reflecting losses, not exceeding 2% measured on 1 mm thick specimens at a wavelength of 700 nm.

34. A glass according to claim 1, wherein said glass exhibits a maximum transmission, including reflecting losses, of > 90%, measured on a 1 mm thick sample in the wavelength range of 495 to 505 nm; a transmission, including reflecting losses, of 47% +/- 3% measured on 1 mm thick specimen at a wavelength of 600 nm; and a transmission, including reflecting losses, not exceeding < 2% measured on 1 mm thick specimen at a wavelength of 700 nm.

35. A glass according to claim 1, wherein said glass exhibits a wavelength for maximum transmission, as measured on a 1 mm thick sample, of 480 nm - 520 nm.

36. A glass according to claim 1, wherein said glass exhibits a transmission at 600 nm of >40%, and a transmission at 700 nm of <1.5%.

37. A method of providing color correction for a color video camera, comprising using a glass according to any one of claims 1 to 36 as a color correction filters in said color video camera.

38. A method of shielding for an illuminated color display, comprising using a glass according to any one of claims 1 to 36 as a shield for said illuminated color display.

39. A method of filtering stray light comprising using a glass according to any one of claims 1 to 36 as a stray light filter.

40. A method of filtering infrared light between at least one light source and at least one light receiver comprising: positioning between said light source and said light receiver a glass according to any one of claims 1 to 36.
